# EUROPEAN PATENT SPECIFICATION

(11) **EP 1 405 610 B1**
(45) Date of publication and mention of the grant of the patent: **23.04.2008**
(21) Application number: 03256245.6
(22) Date of filing: 03.10.2003
(51) Int. Cl.: A61C 7/00, A61C 7/12, A61C 7/14

(54) **Appliance for orthodontic correction**
Vorrichtung zur orthodonischen Korrektur
Dispositif pour correction orthodontique

(30) Priority: 04.10.2002 US 263611
(43) Date of publication of application: 07.04.2004
(73) Proprietor: Rosenberg, Farel Arthur, Beverly Hills, California 90210 (US)
(72) Inventor: Rosenberg, Farel Arthur, Beverly Hills, California 90210 (US)
(74) Representative: Dunne, Emma Louise

(56) References cited:
- US-A- 3 896 549
- US-A- 5 791 896
- US-A1- 2001 041 320
- US-A1- 2002 006 597
- US-B1- 6 190 166

## Description

The present invention relates to orthodontic correction and in particular to a computer programmed system for orthodontic correction of malocclusions utilizing snap-on features.

Wire bending in classic orthodontic practice is a time consuming but essential component of the treatment procedure. Tooth alignment problems are corrected by applying appropriate bends to a generally U shaped arch wire if necessary. When out of line teeth are attached to this wire by means of orthodontic brackets whose wire receiving slots are used as attachment points, forces arise which result in a desired reorientation of the teeth over a period of time. Desired teeth are tied to portions of the arch wire, which serve to define proper orientation to them.

The modes of tooth movement required for misalignments correction are: up-down (extrusion or intrusion); in-out (both movements towards the tongue and towards the cheek side of the mouth); rotation (turning of the tooth in its socket clockwise or counterclockwise); angulation (tilting of the tooth mesially or distally); torque (twisting of the tooth towards the tongue or cheek side of the mouth); and side-to side tooth movement (lateral).

Present day orthodontic brackets are applied to the teeth by cementing. Each bracket is provided with a slot for holding the arch wire and top and bottom grooves and tie wings for holding tie wires, the latter being used for binding the brackets to the arch wire. In older techniques, the brackets were first welded to metal bands; the latter were then slipped over individual teeth and cemented in place.

One-piece orthodontic brackets are cast or molded to exert a fixed ("average") amount of up down, in out, angulation, rotation, and torque force. This is done to reduce the extent of manual manipulation of the arch wires. It assumes that the brackets will be placed and bonded in an accurately predetermined position.

Since provision has been made for "average" teeth in these fixed systems, there is no allowance for normally occurring differences in dental anatomy or bracket placement errors. Arch wire bending is required to correct the fine alignment problems. Time consuming, expensive iteration is therefore also required.

A newer method to eliminate wire bending in orthodontic practice has been disclosed. A series of miniature tooth positioners made with the aid of a computer is in present use. This moves teeth in small increments and requires 22 hours per day of voluntary use. The theory of this series of positioners is based on the natural anatomy of the teeth, i.e. undercuts of the dentition. The method is slow, relatively inefficient, non-retentive and very limited in its usage.

US 6,190,166 describes an orthodontic device including a wire member and a fixing member. The wire member consists of an arch wire fixed through concatenation with a tooth and an engaging part fixed at positions corresponding to the points of fixation of the arch wire. The fixing member 2 fixed on the tooth is provided with a mounting groove for mounting the engaging part.

US2002/0006597 describes a system and method by which an orthodontic appliance is automatically designed and manufactured from digital lower jaw and tooth shape data of a patient provides for preferably scanning a model of the patient's mouth to produce two or three dimensional images and digitizing contours and selected points: A computer may be programmed to construct archforms and/or to calculate finish positions of the teeth, then to design an appliance to move the teeth to the calculated positions. The appliance may include archwires and brackets. Machine code is generated and appliances are automatically produced that will straighten the teeth of the patient. Custom placement jigs may also be automatically designed and fabricated and are provided with the custom appliance to position the appliance on the patient's teeth.

The present invention utilizes a new methodology to achieve and control involuntary movement for 24 hours a day. A separate attachment to each tooth on the lingual or labial side greatly amplifies the mechanical force applied to that tooth. Each device consists of a bonded base, a short neck and "prong" head, square, triangular or multisided. These devices are a computer-manufactured form for each tooth based on models and impressions previously made. A second part of the invention is comprised of a semi-flexible, compartmentalized, U shape arch (also fabricated with computer assistance) which carries a series of connected hollow compartments spaced along the arch so as to be in close proximity to its intended prong head. Depending on its orientation and position along the semi-flexible U shaped arch, each compartment is capable of exerting on each tooth-carrying prong head: in-out, up-down, angulation, rotation, torque and side-to-side forces.

After the patient has worn the initial arch for a period of time, partial orthodontic movement is achieved. It is a relatively simple procedure to replace the first arch with the next sequentially programmed one. This then continues tooth movement by the next increment. When the pre-prepared series of arches has been utilized, the orthodontic procedure is completed. Because the prong head device exerts a much higher leverage on each tooth than the previously described tooth positioners do, the present invention will be more efficient, capable of handling complex cases and able to produce detailed and specific tooth movement. This will result in lower cost and increased patient satisfaction.
Fig. 1 shows side views of the repeating basic prong unit for the upper and lower teeth. Shown are the base of the unit, the short neck and the prong head by which each tooth is gripped and used to exert various corrective forces.
Fig 2 is a plan view of a prong-positioning template used to place the corrective prong units in their most suitable points on the lingual side of the teeth, which need correcting.
Fig. 3 is a partial isometric view of the prong-positioning template for a section of teeth showing the basic units in place for bonding to the lingual surfaces of said teeth. Also shown are the perforations between the prong heads and the template.
Fig. 4 is a plan view of the cemented- in- place prong units each with its base, neck and prong head, after the positioning template has been separated.
Fig. 5 is an isometric view of a semi-flexible U shaped arch with hollow compartments connected to each to other by thin, flexible, interproximal material. Each compartment is provided with four flexible entryway lips, which can be slipped over its corresponding prong head engaging its neck for retention. With all the compartments in place, over said prong heads, corrective forces will be exerted on misaligned teeth. An alternative embodiment employs a single, concentric entryway ring instead of the four lips.
Fig. 6 is a plan view of a dental arch with a "beginning" semi-flexible U shaped arch in place. The corrective forces generated by this particular arch are only the first of a sequence of orthodontic treatments continued by sequential computer-designed arches. The removal and substitution of the aches is made relatively simple by the use of the retentive flexible lips framing each compartment opening. The neck of each prong head receives the snap-on and snap-off retentive components.
Fig 7 is an isometric view of a second embodiment of the invention similar to that shown in Fig. 5 but employing semi rigid interproximal blocks used in "finishing arches-filling in the spaces between the hollow compartments. After the interproximal blocks are compressed, and the prong heads are inserted in their corresponding positions, lateral tooth-separation force vectors are exerted on the teeth.
Fig. 8 shows the use of semi rigid interproximal block inserts between compartments, which must be stretched to properly engage the prong heads, thus creating lateral tooth-closing forces, as well as compressive type interproximal blocks, which generate expansive tooth-to-tooth forces.
Figs 9 to 14 are schematic views showing how various corrective forces are generated by the present invention to remedy malpositioning.

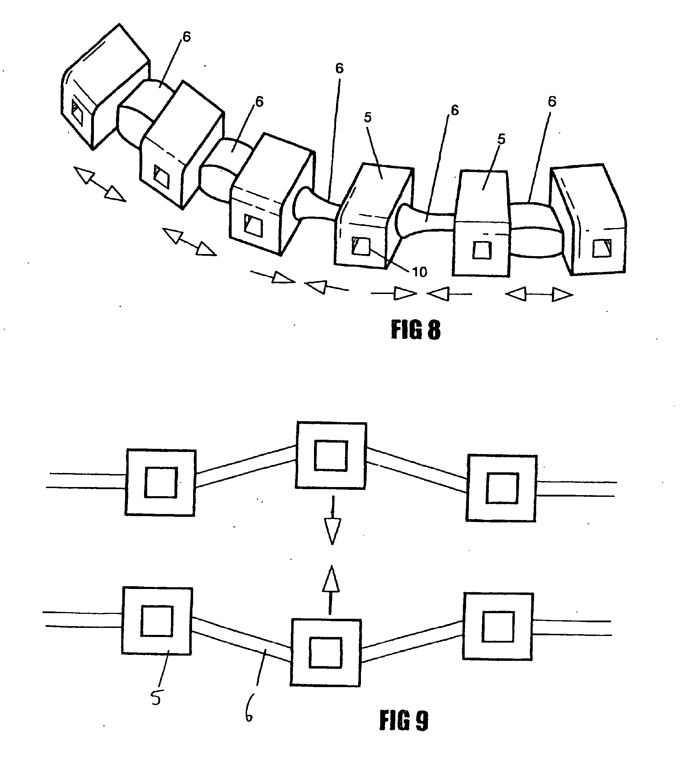

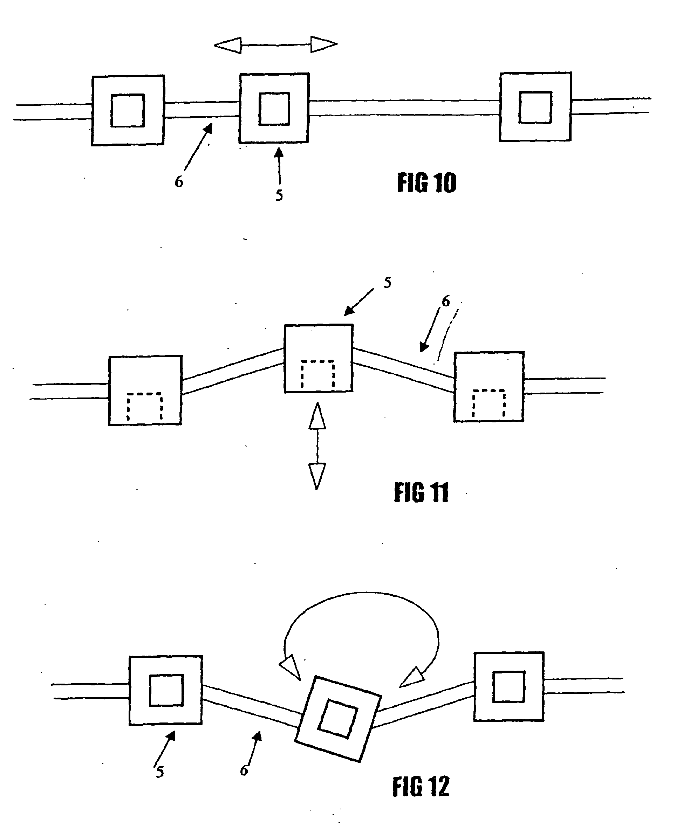

Fig. 9 illustrates up and down motion; Fig. 10 illustrates side-to-side motion; Fig. 11 shows in and out motion and Fig. 12 shows angulation.

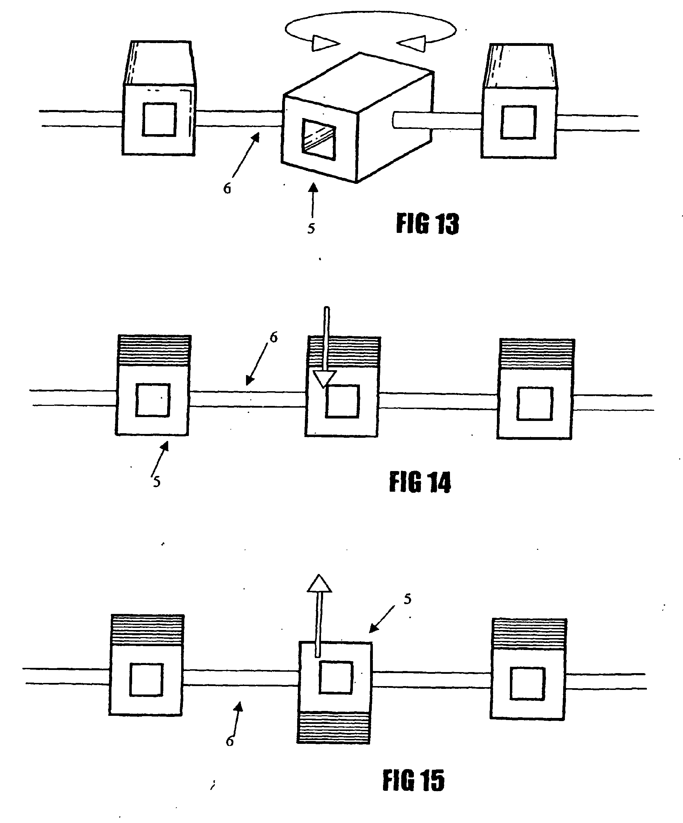

Fig. 13 shows rotation while
Fig. 14 indicates outward torque.
Fig. 15 indicates inward torque.

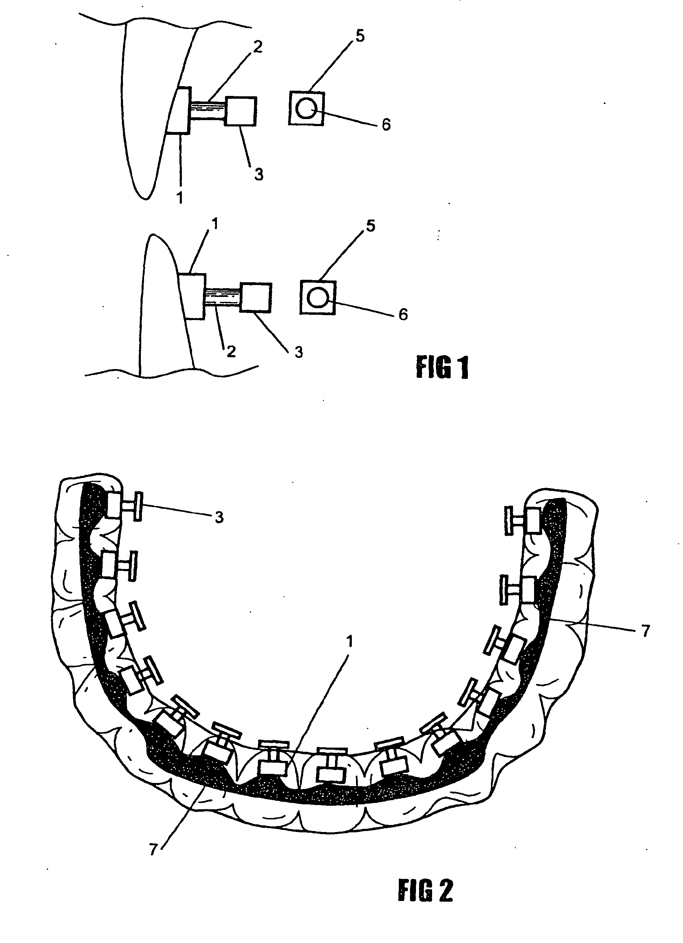

The present invention makes use of a basic, repeating prong head unit to transmit corrective forces to misaligned teeth. This unit, shown in Fig. 1 is made up of a base 1 having a generally curved contacting surface, which permits the unit to be firmly bonded on the lingual side of the teeth. The rest of the unit consists of the short neck 2 and the prong head 3. The prong heads will generally be multisided in shape to which corrective forces are applied to achieve one or more of the desired tooth movements: up down, angulation, rotation, in out, torque, and side to side.

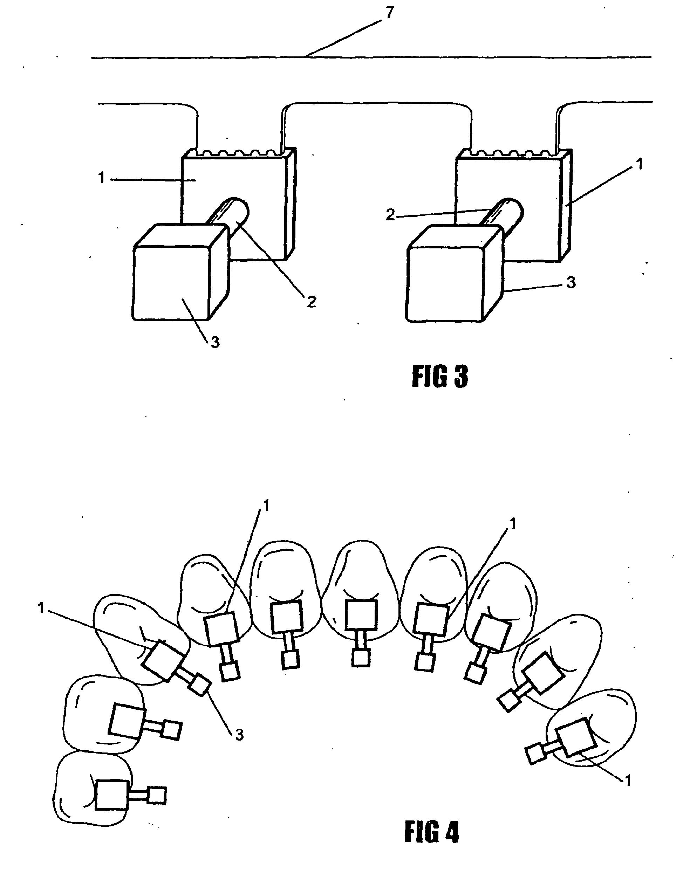

The prong bases are initially attached to a positioning template 7 as shown in Figs. 2 and 3. The occlusal edges of the bases are initially attached to the template, which serves as a guide for the positioning and bonding of each base to its designated tooth. After the bonding material has set, the template 7 is broken off at its attachment point to the bonded base and discarded. The template has been designed and produced by a computerized manufacturing process based on specific prong placement on the desired teeth. When the template is removed, the bonded prong heads (Fig. 4) are ready for activation.

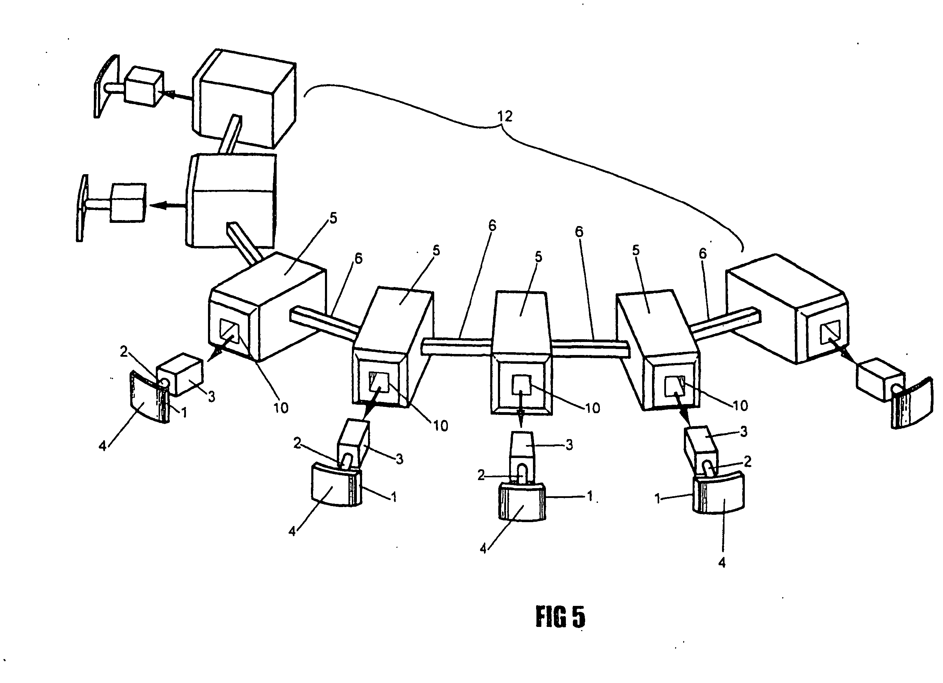

A thin interproximal, semi flexible, U-shaped arch 12 (Fig.5) is next prepared. Compartments are positioned on the arch tube at points corresponding to desired selected tooth sites. This is again a computer-assisted operation. Each compartment is provided with flexible entry lips 10, which permit each compartment to engage and retain a prong head. When all the compartments are occupied, one or more of the following forces are exerted on each engaged prong head: up-down, angulation, rotation, in-out, torque and side-to-side movement, achieving in each case a small increment of the desired orthodontic correction. After a suitable period of wearing the arch, it is unsnapped and replaced with a second, sequential arch, which contains computer-installed changes for achieving a second increment of tooth movement.

This sequence is repeated until final, satisfactory alignment has been achieved, the orthodontic adjustment has been completed, the last arch is discarded and the prong heads are removed. A final, clear plastic aligner can then be worn for a short time to stabilize the correction and prevent relapse

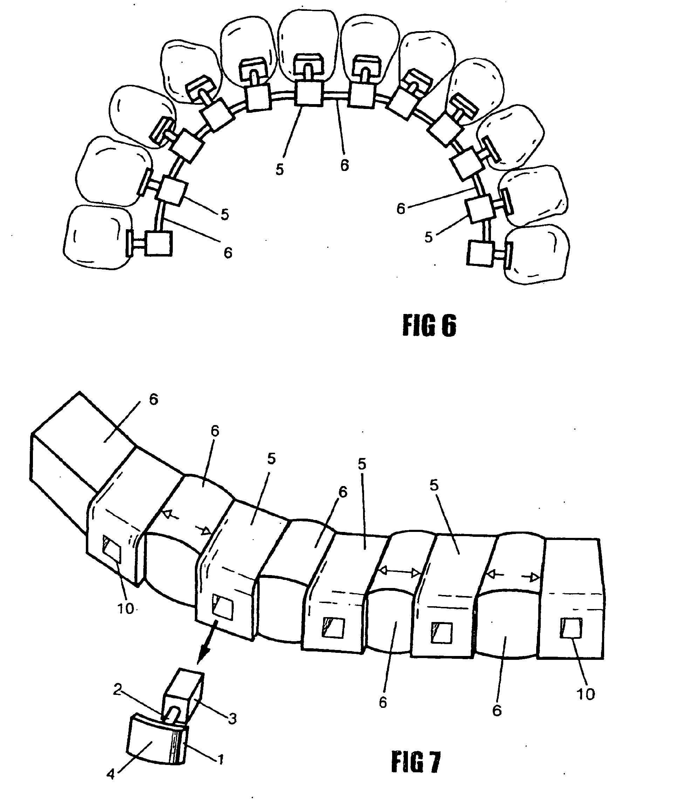

The interproximal spaces 6 (Fig. 5) can be semi- flexible or rigid material and be varied in thickness, shape and type of material to aid the desired force generation. The interproximal material can be compressible (Fig. 7) which forces the hollow compartments apart or extensible material (Fig. 8), which stretches to pull the compartments together.

The operating principle of the invention can also be explained by the use of the schematic drawings of Figs. 9-15 in which the closed end chambers are represented by squares the opening lips by small squares and the interproximal material by horizontal lines. The retention feature can be increased by the use of a circular opening.
Fig. 9 represents the generation of up and down forces on a tooth.
Fig. 10 shows the generation of side-to-side forces on a tooth.
Fig. 11 is a top view of in and out forces.
Fig. 12 shows angulation forces.
Fig. 13 shows rotation forces.
Fig. 14 shows downward twisting torque.
Fig 15 shows the generation of upward twisting torque.

Advantages of the present invention include the elimination of orthodontic wires; ligations and other time-consuming appliances now required in orthodontics while achieving complex corrections of high precision. Another feature of the present invention is its ability of moving teeth without patient cooperation. The installation of the invention on the lingual side of the tooth makes for low visibility and comfort. The invention can be use on the labial side of the tooth when cosmetic concerns are not important.

## Claims

1. A system for correcting misaligned teeth in orthodontics comprising:
a. a set of prong units each having a base (1), a neck (2) extending therefrom and terminating in a multi-sided head (3);
b. an upper and lower placement template frame (7) which joins each respective prong unit at its base in a computer-oriented pattern and permits each base to firmly and accurately bond to the lingual side of its designated tooth in the upper and lower dental arches and also permits the template frame to be broken free of the now-bonded prong bases and discarded;
c. a U shaped arch (12) made up of flexible material with a series of elastic entry compartments (5) closed at one end with four flexible lips (10) at the entry way permitting the insertion and retention of a prong head and its neck which creates a predetermined correction and retention force;
whereby, with the arch compartments snapped over their designated prong heads, corrective forces chosen from up-down, in-out, angulation, rotation, torque and side to side can be created on all misaligned teeth, and incremental motion achieved when a series of sequential arches are worn over a period of time with the total correction being attained at the end of the procedure.

2. A system for correcting misaligned teeth as claimed in Claim 1 in which said elastic entry compartments (5) are in the shape of hollow chambers closed at one end and provided with elastic lips at their open ends whereby each compartment can be snapped over a multi-sided prong head (3) and adjacent neck (2) to hold it firmly and thus create unique forces which produces a small, incremental tooth movement in a predetermined direction.

3. A system for correcting misaligned teeth as claimed in Claim 1 or 2 in which the interproximal material (6) between said entry compartments (5) may be chosen from semi flexible thin substances and semi rigid thick substances as desired.

4. A system for correcting misaligned teeth as claimed in any of Claims 1, 2 or 3, in which the interproximal material (6) between said entry compartments (5) may be a variety of contracting and expanding shapes to provide varied correctional forces on the prong heads and their respective computer generated chambers.

5. A system for correcting misaligned teeth as claimed in any preceding Claim in which the interproximal material (6) is of flexible material to obtain up-down, in-out, side-to-side, angulation, rotation, torque forces to achieve position corrections of misaligned teeth.

6. A system for correcting misaligned teeth as claimed in any preceding Claim in which the prong heads (3) are of multi-sided shape to be inserted and firmly held by said elastic lips (10) in their respective compartment (5) and thus can create leveraged forces on individual teeth.

7. A system for correcting misaligned teeth as claimed in any preceding Claim in which said four flexible lips (10) are replaced by a doughnut-shaped, elastic retaining ring for engagement of its prong head (3).

8. A system for correcting misaligned teeth as claimed in any preceding Claim in which the prong necks (2) provide leverage for tooth movement and the leverage can be varied by varying the length of the necks.

9. A system for correcting misaligned teeth as claimed in any preceding Claim in which the said prongs (1, 2, 3) can be applied to the labial side of the teeth.

10. A system for correcting misaligned teeth as claimed in any of the claims 1 to 8 in which the said prongs (1, 2, 3) can be applied to the lingual side of the teeth.

11. A system for correcting misaligned teeth as claimed in any preceding claim further comprising bonding material for bonding each prong unit to a selected tooth.

## Patentansprüche

1. Ein System zur Korrektur von Zähnen mit Fehlstellung für die Kieferorthopädie umfassend:
a. einen Satz Stifte mit jeweils einer Basis (1), einem Schaft (2), der daraus herausragt, und in einem mehrseitigen Kopf (3) endet;
b. einen oberen und unteren Templatrahmen (7) zur Placierung, der mit jedem der Stifte über deren Basis nach einem computerorientiertem Muster verbunden Ist, und eine feste und genaue Bindung der Basis an die linguale Seite des betreffenden Zahnes im oberen und unteren Zahnbogen erlaubt, und zudem die Entfernung des Templatrahmens von den nunmehr gebundenen Stiftbasen und dessen Entsorgung erlaubt;
c. einen U-förmigen Bogen (12) aus flexiblem Material mit einer Reihe elastischer Aufnahmefächer (5), die an einem Ende geschlossen sind und vier flexible Lippen (10) entlang des Aufnahmekanals enthalten, die das Einführen und das Festhalten eines Stiftkopfes und dessen Schafts ermöglichen, wodurch eine vorbestimmte Korrektur und Rückhaltkraft erzeugt wird;
wobei, wenn die Bogenfächer ihre jeweiligen Stiftköpfe umschließen, auf alle Zähne mit Fehlstellungen Korrekturkräfte ausgewählt unter auf-ab gerichteten Kräften, Innen-außen gerichteten Kräften, Angularkräften, Torque-Kräften, Rotationskräften und seitlich gerichteten Kräften ausgeübt werden können, und wobei eine schrittweise Bewegung erzielt wird, wenn eine Reihe aufeinanderfolgender Bögen über eine Zeitspanne getragen wird, wobei am Ende des Verfahrens eine vollständige Korrektur erzielt wird.

2. System zur Korrektur von Zähnen mit Fehlstellung nach Anspruch 1,
wobei die elastischen Aufnahmefächer (5) die Form von Hohlkammern haben, die an einem Ende geschlossen und an Ihrem offenen Ende mit elastischen Lippen versehen sind, sodass jedes Fach über einen mehrseitigen Stiftkopf (3) und dem benachbarten Schaft (2) gestülpt werden und diesen festhalten kann, und so einzigartige Kräfte erzeugen kann, die eine kleine schrittweise Zahnbewegung in eine vorgegebene Richtung bewirken.

3. System zur Korrektur von Zähnen mit Fehlstellung nach Anspruch 1 oder 2, wobei das sich zwischen den Aufnahmefächern (5) befindliche Material (6) je nach Bedarf ausgewählt sein kann unter semiflexiblen dünnen Substanzen und semifesten dicken Substanzen.

4. System zur Korrektur von Zähnen mit Fehlstellung nach einem der Ansprüche 1, 2 oder 3, wobei das sich zwischen den Aufnahmefächern (5) befindliche Material (6) verschiedene kontraktierende und expandierende Formen haben kann, um unterschiedliche Korrekturkräfte auf die Stiftköpfe und deren Jeweilige mit dem computergenerierten Kammern auszuüben.

5. System zur Korrektur von Zähnen mit Fehlstellung nach einem der vorherstehenden Ansprüche, wobei das dazwischen befindliche Material (6) ein flexibles Material ist, um auf-ab gerichtete, innen-außen gerichtete, seitlich gerichtete, Angular-, Rotations-, Torque-Kräfte zu erhalten, um Korrekturen der Position von Zähnen mit Fehlstellung zu erzielen.

6. System zur Korrektur von Zähnen mit Fehlstellung nach einem der vorhergehenden Ansprüche, wobei die Stiftköpfe (3) eine mehrseitige Form haben, damit sie in die jeweiligen Fächer (5) eingeführt und durch die elastischen Lippen (10) festgehalten werden, und um so auf die einzelnen Zähne Hebelkräfte ausüben zu können.

7. System zur Korrektur von Zähnen mit Fehlstellung nach einem der vorhergehenden Ansprüche, wobei die vier flexiblen Lippen (10) durch Doughnut-förmige elastische Rückhalteringe zur Bindung der Stiftköpfe (3) ersetzt sind.

8. System zur Korrektur von Zähnen mit Fehlstellung nach einem der vorhergehenden Ansprüche, wobei durch die Stiftschäfte (2) Hebelkräfte zur Bewegung der Zähne erzeugt werden und die Hebelkräfte durch Variation der Länge der Schäfte variiert werden kann.

9. System zur Korrektur von Zähnen mit Fehlstellung nach einem der vorhergehenden Ansprüche, wobei die Stifte (1, 2, 3) auf der lablalen Zahnseite angeordnet sein können.

10. System zur Korrektur von Zähnen mit Fehlstellung nach einem der Ansprüche 1 bis 8, wobei die Stifte (1, 2, 3) auf der lingualen Zahnseite angeordnet sein können.

11. System zur Korrektur von Zähnen mit Fehlstellung nach einem der vorhergehenden Ansprüche, das zusätzlich ein Haftmaterial zur Bindung der Stifte an einem ausgewählten Zahn enthält.

## Revendications

1. Système permettant de corriger un défaut d'alignement dentaire en orthodontie, comprenant :
a. un ensemble d'unités de griffes ayant chacune une base (1), un corps (2) s'étendant à partir de celle-cl et se terminant par une tête multiface (3) ;
b. une matrice de positionnement supérieure et Inférieure (7) qui fixe chaque unité de griffe respective au niveau de sa base selon une configuration orientée par voie Informatique, et permet à chaque base de se fixer fermement et précisément sur la face linguale de la dent désignée dans les arcs dentaires supérieur et inférieur, et permet également à la matrice de se dégager des bases de griffes qui viennent d'être fixées, et d'être dégagée ;
c. un arc en forme de U (12) constitué d'une matière flexible avec une série de compartiments d'entrée élastiques (5) fermés à une extrémité par quatre lèvres flexibles (10) au niveau du passage d'entrée, permettant l'insertion et le maintien de la tête de la griffe et de son corps, ce qui génère une force correctrice et de maintien prédéterminée ;
moyennant quoi, avec les compartiments d'arc appuyés sur les têtes de griffes désignées, des forces correctrices choisies entre haut/bas, intérieur/extérieur, angulation, rotation, couple et face-à-face peuvent être créées sur l'ensemble des dents présentant un défaut d'alignement, et un déplacement incrémentiel peut être atteint lorsqu'une série d'arcs séquentiels est portée sur une certaine période, la correction totale étant atteinte à la fin de la procédure.

2. Système permettant de corriger un défaut d'alignement dentaire selon la revendication 1, dans lequel les compartiments d'entrée élastiques (5) se présentent sous la forme de chambres creuses fermées à une extrémité et dotées de lèvres élastiques au niveau de leurs extrémités ouvertes, moyennant quoi chaque compartiment peut être appuyé sur une tête de griffe multiface (3) et le corps adjacent (2) afin de le maintenir fermement et ainsi de créer des forces uniques qui produisent un petit déplacement incrémentiel de la dent dans une direction prédéterminée.

3. Système permettant de corriger un défaut d'alignement dentaire selon la revendication 1 ou 2, dans lequel la matière interproximale (6) située entre lesdits compartiments d'entrée (5) peut être choisie entre des substances minces semi-flexibles et des substances épaisses semi-rigides au choix.

4. Système permettant de corriger un défaut d'alignement dentaire selon l'une quelconque des revendications 1, 2 ou 3, dans lequel la matière interproximale (6) située entre lesdits compartiments d'entrée (5) peut présenter toute une série de formes qui se contractent et se dilatent afin d'obtenir les diverses forces correctrices sur les têtes de griffes et leurs chambres générées par voie informatique respectives.

5. Système permettant de corriger un défaut d'alignement dentaire selon l'une quelconque des revendications précédentes, dans lequel la matière interproximale (6) est une matière flexible permettant d'obtenir les forces haut/bas, intérieur/extérieur, face-à-face, angulation, rotation et de couple, afin d'atteindre les corrections en termes de positionnement des dents présentant un défaut d'alignement.

6. Système permettant de corriger un défaut d'alignement dentaire selon l'une quelconque des revendications précédentes, dans lequel les têtes de griffes (3) présentent une forme multiface devant être insérée et maintenue fermement par lesdites lèvres élastiques (10) dans leur compartiment respectif (5) et peuvent ainsi créer des forces correspondant à un effet de levier sur les dents individuelles.

7. Système permettant de corriger un défaut d'alignement dentaire selon l'une quelconque des revendications précédentes, dans lequel lesdites quatre lèvres flexibles (10) sont remplacées par une bague de retenue élastique en forme d'anneau, permettant l'engagement de sa tête de griffe (3).

8. Système permettant de corriger un défaut d'alignement dentaire selon l'une quelconque des revendications précédentes, dans lequel les corps des griffes (2) permettent d'obtenir un effet de levier pour le mouvement des dents, et l'effet de levier peut être modifié en faisant varier la longueur des corps.

9. Système permettant de corriger un défaut d'alignement dentaire selon l'une quelconque des revendications précédentes, dans lequel lesdites griffes (1, 2, 3) peuvent être appliquées sur la face linguale des dents.

10. Système permettant de corriger un défaut d'alignement dentaire selon l'une quelconque des revendications 1 à 8, dans lequel lesdites griffes (1, 2, 3) peuvent être appliquées sur la face linguale des dents.

11. Système permettant de corriger un défaut d'alignement dentaire selon l'une quelconque des revendications précédentes, comprenant un matériau liant permettant de relier chaque unité de griffe sur une dent choisie.
